# EUROPÄISCHE PATENTSCHRIFT

(11) **EP 1 999 531 B1**
(45) Veröffentlichungstag und Bekanntmachung des Hinweises auf die Patenterteilung: **15.06.2011**
(21) Anmeldenummer: 07712428.7
(22) Anmeldetag: 05.03.2007
(51) Int. Cl.: G05D 16/20

(54) **STEUERGERÄT MIT EINEM REGLER ZUR REGELUNG DES ELEKTRISCHEN SPULENSTROMS EINES REGELMAGNETVENTILS**
CONTROL APPLIANCE COMPRISING A REGULATOR FOR REGULATING THE ELECTRICAL COIL CURRENT OF A REGULATING ELECTROVALVE
APPAREIL DE COMMANDE COMPRENANT UN RÉGULATEUR POUR RÉGULER LE COURANT DE BOBINE ÉLECTRIQUE D'UNE ÉLECTROVANNE DE RÉGULATION

(30) Priorität: 20.03.2006 DE 102006012657
(43) Veröffentlichungstag der Anmeldung: 10.12.2008
(73) Patentinhaber: Continental Automotive GmbH, 30165 Hannover (DE)
(72) Erfinder: LEHNER, Oliver, 93176 Beratzhausen (DE); ROBL, Michael, 85057 Ingolstadt (DE)
(86) Internationale Anmeldenummer: PCT/EP2007/052036
(87) Internationale Veröffentlichungsnummer: WO 2007/107444

(56) Entgegenhaltungen:
- DE-A1- 19 930 965
- JP-A- 6 281 043
- JP-A- 10 095 321

## Beschreibung

Die Erfindung betrifft ein Steuergerät mit einem Regler, der zur Regelung des elektrischen Spulenstroms eines Regelmagnetventils, dessen Anker der Einstellung eines gewünschten Volumenstroms in einer Kraftfahrzeug-Hydraulikvorrichtung dient, über einen Rückkoppelzweig mit dem Regelmagnetventil unter Bildung eines Regelkreises verbunden ist, wobei der Anker des Regelmagnetventils zur Reduzierung seiner Haftreibung und/oder Magnethysterese ständig mit einer Ankerschwingung beaufschlagt ist.

Zum Beispiel bei Automatikgetrieben in Kraftfahrzeugen kommen zum Koppeln oder Festhalten von Wellen hydraulisch betätigte Kupplungen und Bremsen zum Einsatz. Der Hydraulikdruck (Öldruck) der Hydraulikflüssigkeit in diesen Kupplungen und Bremsen wird durch sogenannte Regelmagnetventile mit zugeordneten digitalen Regelkreisen eingestellt. Im Rückkoppelzweig des jeweiligen Regelkreises ist dabei ein Messglied bzw. ein Sensor vorgesehen, mit dessen Hilfe der Ist-Strom durch das Regelmagnetventil ermittelt und dem Eingang eines digitalen Reglers, insbesondere PID-Reglers zugeführt wird. Aufgrund des vorbekannten Kennlinienfeldes des Regelmagnetventils lässt sich vom gemessenen elektrischen Strom durch das Regelmagnetventil auf den Hydraulikdruck schließen. Bei einem Regelmagnetventil bekannter Bauart lässt sich dessen Anker im Volumenstrom der Hydraulikflüssigkeit der jeweiligen Kupplung oder Hydraulikbremse auf Grund seiner Haftreibung an den Innenwänden seines Stellzylinders und/oder aufgrund seiner Magnethysterese nur dann ad hoc in eine gewünschte Position bewegen, wenn sich der Strom, der durch das Ventil fließt, zumindest um einen vorgegebenen spezifischen Strom- Schwellwert bzw. -Mindestwert ändert. Dieser muss aufgebracht werden, um überhaupt die Haftreibung und/oder die Magnethysterese des Ankers zu überwinden. Der Schwellwert variiert dabei in Abhängigkeit von verschiedenen Umgebungsparametern wie z.B. Viskosität der Hydraulikflüssigkeit oder Temperatur. Dieses Störverhalten des Ankers ist problematisch, da trotz eines exakt eingeregelten Stroms dann nicht exakt auf den Durchfluss des Hydrauliköls durch das Regelmagnetventil geschlossen werden kann und somit auch nicht auf den dadurch aufgebauten Druck des Volumenstroms in der jeweiligen Hydraulikeinrichtung.

Dieses Problem wurde bisher nach einem ersten Ansatz wie z.B. gemäß der WO 02/25132 A1 dadurch angegangen, dass nach dem diskreten Regler eines Kupplungsbetätigungssystems eine Schwingung, typischer Weise eine Pulsweitenmodulation, durch die die Spannung über das elektromagnetisch betätigte Ventil des Kupplungsbetätigungssystems und somit der Strom durch das Ventil bestimmt wird , aufgeschlagen wird, und dadurch der Anker dieses Regelmagnetventils in einer ständigen Zitter-, d.h. Dither- Bewegung gehalten wird. Auch beim Regelverfahren des Bremsgerätes der JP 100 95 321 A wird lediglich das ausgegebene Stellsignal des Reglers mit einem Dither-Signal beaufschlagt. In gleicher Weise wird zum Regeln des Solenoid-Ventils der JP 06 281 043 A erst nach dem Regler bzw. Controller auf dessen ausgegebenes Stellgrößen-Signal ein Dither-Signal synchron aufgeprägt. In entsprechender Weise wird auch erst die Ausgangsspannung des Stromreglers der DE 199 30 965 A1 mit einer Ditherspannung überlagert. Dasselbe Regelkonzept wird auch beim Magnetventil der DE 10 2004 048 706 A1 verfolgt, wo ebenfalls erst nach einem PID-Stromregler dessen ausgegebenes Stellgrößen-Signal mit einem Dither-Signal zusammengeführt wird. Um eine Reaktion des Reglers auf diese Dither-Schwingungen zu vermeiden, ist eine Filterung des gemessenen Stroms als Regelgröße im Rückkoppelzweig des Regelkreises zweckmäßig. So ist z.B. bei der DE 10 2004 048 706 A1 ein Tiefpass im Rückkoppelzweig des Regelkreises zur Filterung der Dither-Frequenz vorgesehen. Auch kann ein Selektivfilter dem Stromregler vorgeschaltet werden, um ihn von der Dither-Frequenz zu entkoppeln. Mit Hilfe einer derartigen Filterung können zwar diese Dither-Schwingungen ausreichend geglättet werden. Dadurch wird aber der Dither-Regler allerdings deutlich träger und das Verfahren ist nur für hochfrequente Schwingungen, insbesondere für Schwingungen mit mehr als 250 Hz, geeignet. In der Praxis ist hingegen eine Änderung des Ventilstroms und damit der Ankerschwingungen des jeweiligen, spezifischen Regelmagnetventils mit deutlich niederfreguenteren Schwingungen gefordert.

Das Dokument DE 19930965 zeigt ebenfalls einen relevanten Stand der Technik.

Nach einem zweiten, bekannten Ansatz wird der Soll-Strom als Führungsgröße des diskreten Reglers, insbesondere PID-Reglers, des Regelkreises bereits vorab mit einer entsprechenden Schwingung beaufschlagt. Mit diesem Verfahren sind zwar die gewünschten niederfrequenten Schwingungen realisiert. Allerdings werden in der Praxis Schwebungen hinsichtlich der Stellgröße des Reglers beobachtet. Diese sind insbesondere dann problematisch, wenn die Aufruffrequenz des PID-Reglers von Umgebungsgrößen wie zum Beispiel der Temperatur abhängig ist und somit die Schwebungen nicht exakt bestimmt werden können.

Der Erfindung liegt die Aufgabe zurunde, ein Steuergerät mit einem digitalen Regler als Komponente eines digitalen Regelkreises zur weiter verbesserten Regelung des elektrischen Spulenstroms eines Regelmagnetventils bereit zu stellen, das der Einstellung eines gewünschten Volumenstroms einer Kraftfahrzeug-Hydraulikvorrichtung dient. Diese Aufgabe wird bei einem Steuergerät der eingangs genannten Art dadurch gelöst, dass intern im Regler des Regelkreises selbst der Sollstrom, der dem Regler eingangsseitig als Führungsgröße zugeführt ist, im Wesentlichen synchron zum Taktzyklus des Reglers mit einem intern im Regler generierten Dither-Signal zur Erzeugung der Ankerschwingung beaufschlagt ist.

Durch die interne Beaufschlagung des Führungssignals bzw. Sollwertsignals des Reglers, wie z.B. eines PID-Reglers, mit einem Dither-Signal im Wesentlichen synchron zum Taktzyklus des diskreten bzw. digitalen Reglers sind Schwebungen im ausgehenden Stellsignal des Reglers weitgehend vermieden. Dadurch kann der durch die Führungsgröße bestimmte Mindeststrom zur zyklischen Variation des Ventilstroms des Regelmagnetventils im Wesentlichen exakt eingehalten werden, d.h. es kann eine hohe Regelgenauigkeit erreicht werden. Ferner sind insbesondere im Rückkoppelzweig des digitalen Regelkreises des diskreten Reglers keine weiteren zusätzlichen Filter erforderlich, die die Sprungantwort des Reglers negativ beeinflussen oder dessen Dynamik ungünstig verändern könnten. Denn die Regelgröße des Rückkoppelzweigs bleibt weitgehend frei von Störschwebungen, die zu unerwünschten Fehlregelvorgängen des digitalen Reglers führen könnten. Auf diese Weise sind niedrigere Frequenzen, insbesondere Frequenzen unter 250 Hz, für die Ankerschwingung des Regelmagnetventils ermöglicht, die in der Praxis relevant sind.

Die Erfindung wird durch Vorrichtungsanspruch 1 und Verfahrensanspruch 5 definiert.

Die Erfindung betrifft auch ein Verfahren zur Regelung des elektrischen Spulenstroms eines Regelmagnetventils, dessen Anker der Einstellung eines gewünschten Volumenstroms in einer Kraftfahrzeug-Hydraulikvorrichtung dient, mittels einem Regler eines Steuergeräts, der über einen Rückkoppelzweig mit dem Regelmagnetventil unter Bildung eines Regelzweiges verbunden ist, wobei der Anker des Regelmagnetventils zur Reduzierung seiner Haftreibung und/oder Magnethysterese ständig mit einer Ankerschwingung beaufschlagt wird, welches dadurch gekennzeichnet ist, dass intern im Regler des Regelkreises selbst der Sollstrom, der dem Regler eingangsseitig als Führungsgröße zugeführt wird, im Wesentlichen synchron zum Taktzyklus des Reglers mit einem intern im Regler generierten Dither-Signal zur Erzeugung der Ankerschwingung beaufschlagt wird.

Sonstige Weiterbildungen der Erfindung sind in den Unteransprüchen wiedergegeben.

Die Erfindung und ihre Weiterbildungen werden nachfolgend an Hand von Zeichnungen näher erläutert.

Es zeigen:
- Figur 1: in schematischer Darstellung eine Getriebe- steuerung als Ausführungsbeispiel eines er- findungsgemäßen Steuergeräts zur Regelung des elektrischen Spulenstroms eines Regelmagnet- ventils, dessen Anker der Einstellung eines gewünschten Volumenstroms in einer Kraftfahr- zeug-Hydraulikvorrichtung dient,
- Figur 2: in schematischer Darstellung den Aufbau des Regelmagnetventils von Figur 1,
- Figur 3: den zeitlichen Verlauf des Soll-Stroms als Führungsgröße am Eingang des PID-Reglers der Getriebesteuerung von Figur 1,
- Figur 4: in schematischer Darstellung den zeitlichen Verlauf eines Dither-Signals, das intern im PID-Regler von Figur 1 auf dessen Sollstrom, d.h. Führungsgröße, aufgebracht wird, und
- Figur 5: der aus der internen Beaufschlagung nach Fi- gur 3 resultierende Soll-Strom als Führungs- größe des PID-Reglers der Getriebesteuerung nach Figur 1.

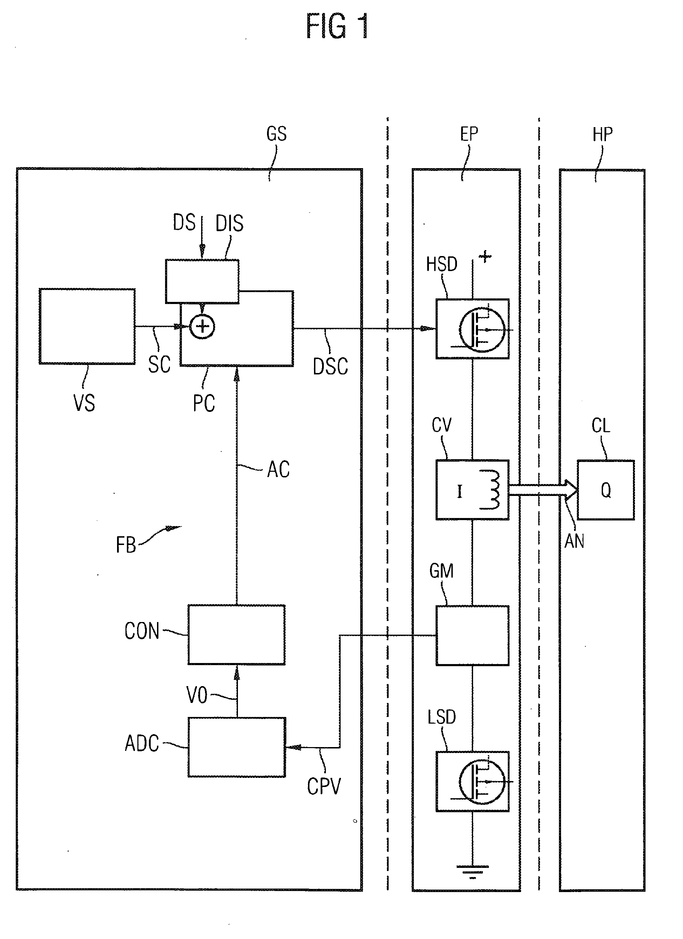

Elemente mit gleicher Funktion und Wirkungsweise sind in den Figuren 1 mit 5 jeweils mit denselben Bezugszeichen versehen.

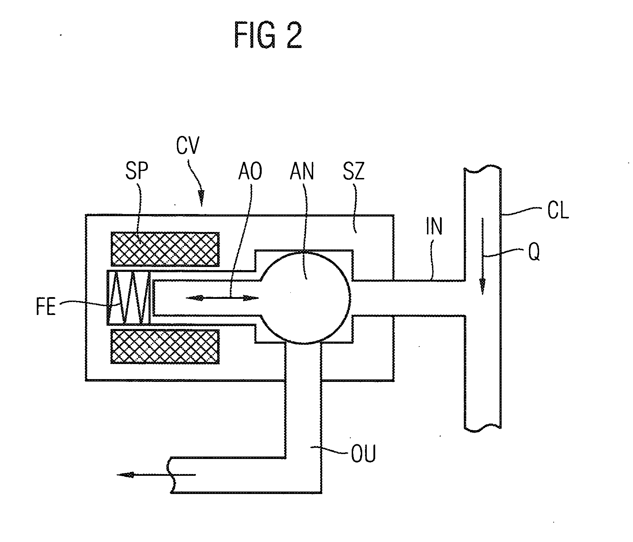

Figur 1 zeigt in schematischer Darstellung beispielhaft eine Getriebesteuerung GS als Steuergerät, die der Einstellung des Volumenstroms Q eines Hydraulikmediums, insbesondere Hydraulikflüssigkeit, in einer Kraftfahrzeug-Hydraulikvorrichtung HP mittels eines elektrischen Stellglieds bzw. Aktuators EP dient. Die Getriebesteuerung ist vorzugsweise als Automatikgetriebesteuergerät ausgebildet. Das elektrische Stellglied bzw. der Aktuator EP weist als Hauptkomponente ein Regelmagnetventil CV auf. Durch Einstellung dessen Spulenstroms I taucht dessen Anker AN in einem Stellzylinder SZ (siehe Figur 2) verschieden tief in den Volumenstrom Q der Hydraulikvorrichtung HP ein. Der Anker AN ist dabei in der Figur 1 der zeichnerischen Einfachheit halber lediglich durch einen Pfeil angedeutet. Die Hydraulikvorrichtung HP ist in der Praxis durch eine Kupplung CL oder durch eine Hydraulikbremse gebildet. Dem Spulenstrom I des Regelmagnetventils CV ist über dessen Kennlinienfeld ein bestimmter Hydraulikdruck des Volumenstroms Q in der Hydraulikvorrichtung HP zugeordnet.

Das Regelmagnetventil CV ist schematisch in der Figur 2 als Einzelheit dargestellt. Es lässt einen Teil des Volumenstroms Q der Hydraulikvorrichtung HP durch seinen Einlasskanal IN ein. Sein Anker AN sitzt in Ruhestellung über der Eingangsöffnung eines Auslasskanals OU und verschließt diesen dicht aufsitzend. Er lässt sich mittels einer elektromagnetischen Spule SP von der Eingangsöffnung dieses Auslasskanals OU teilweise oder ganz wegbewegen, so dass dieser schrittweise geöffnet werden kann. Die axiale Aktorverschiebewegung des Ankers AN ist in der Figur 2 durch einen Doppelpfeil AO repräsentiert. Der Anker AN weist als Verschlusselement an seinem dem Auslasskanal OU zugewandten Ende ein Kugelteil auf. An seinem gegenüberliegenden Fußende ist er an ein Federelement FE angebracht. Dieses wird beim Wegbewegen des Ankers AN von dem Auslasskanal OU federelastisch vorgespannt. Wird der Spulenstrom I der elektromagnetischen Spule SP ausgeschaltet, so wird der Anker AN durch das Federelement FE wieder in seine Ruhestellung zurückgedrückt, in der es den Auslasskanal OU versperrt. Selbstverständlich kann das Regelmagnetventil so abgewandelt sein, dass es in der Ruhestellung des Ankers geöffnet ist und sein Anker AN beim Einschalten des Spulenstroms teilweise oder ganz über den Auslasskanal OU bewegt wird und diesen in gewünschter Weise zur Erzeugung eines bestimmten Drucks des Volumenstroms versperrt.

Um den Spulenstrom I des Regelmagnetventils CV auf einen bestimmten zeitlichen Sollstromverlauf einzuregeln und einen damit einhergehenden zeitlichen Druckverlauf des Volumenstroms Q, weist die Getriebesteuerung GS einen dynamischen digitalen Regler, insbesondere PID-Regler PC auf, der mit dem Regelmagnetventil CV über einen Rückkoppelzweig FB unter Bildung eines digitalen Regelkreises verbunden ist. Im Rückkoppelzweig FB ist ein Messglied bzw. ein Sensor GM zur Strommessung angeordnet, der an einer niederpotentialigen Treiberstufe LSD hängt. Er ist hier im Ausführungsbeispiel durch ein Galvanometer gebildet, das die jeweilig vorliegende Spannung über einen bestimmten, elektrischen Widerstand als Maß für den Ist-Strom I ermittelt. Anschließend wird die gemessene Spannung CPV mittels eines AD-Wandlers ADC im Rückkoppelzweig FB digitalisiert. Die digitalen Spannungswerte VO am Ausgang des AD-Wandlers ADC werden einer Umrechungseinheit CON im Rückkoppelzweig FB zugeführt, die die gemessenen Spannungswerte in zugehörige Ist-Strom Werte AC nach dem ohmschen Gesetz umrechnet. Diese diskreten, gemessenen Ist-Stromwerte AC werden dann dem PID-Regler PC als gemessene Regelgröße zugeführt.

Dem Eingang des PID-Reglers PC wird ein gewünschter Soll-Strom Verlauf SC mittels einer nicht dargestellten Fahrzeugkomponente VS eingangsseitig vorgegeben, um in der Hydraulikvorrichtung HP einen gewünschten Hydraulikdruckverlauf für das dortige Hydraulikmedium zu erzeugen. Der PID-Regler PC ermittelt aus der Differenz der zugeführten diskreten Ist-Stromwerte AC und den diskreten Sollstromwerten SC, die die Führungsgröße des Reglers PC bilden, eine Regelabweichung, aus der er eine Stellgröße DSC ableitet. Der PID-Regler PC gibt diese Stellgröße DSC über einen hochpotentialigen Treiber HSD auf den Eingang des Regelmagnetventils CV, um auf einen bestimmten Soll-Stromwert SC einzuregeln.

Um nun die Haftreibung des Ankers AN des Regelmagnetventils CV in dessen Stellzylinder auf Grund des dort fließenden Hydraulikmediums und/oder etwaig sonstiger Magnethystereseeffekte kompensieren zu können, wird der Anker AN des Regelmagnetventils CV mit einer zyklischen bzw. periodischen Grundschwingung fortlaufend in Bewegung gehalten. Dazu wird sein Ventilstrom I ständig, vorzugsweise zyklisch variiert, d.h. insbesondere mit einer Vibrationsschwingung beaufschlagt. Dabei wird intern im PID-Regler PC dem Sollstrom SC ein sogenanntes Dither-Signal DS aufgeprägt. Diese Beaufschlagungsprozedur ist in der Figur 1 durch einen Block mit den Bezugszeichen DIS am diskreten Regler PC gekennzeichnet. Um dabei unerwünschte Schwebungen bzw. Interferenzen im zeitlichen Verlauf der Stellgröße DSC möglichst zu vermeiden, wird im PID-Regler PC das Dither-Signal DS im Wesentlichen synchron zum Taktzyklus des diskreten PID-Reglers PC auf dessen eingangseitige Führungsgröße SC aufgezwungen. Es wird also die Führungsgröße SC des PID-Reglers PC mit einer Schwingung nicht außerhalb des Reglers, sondern im Regler selbst und damit kongruent bzw. synchron zu dessen Taktzyklus bzw. Aufrufzyklus beaufschlagt. Dadurch sind Schwebungen im Stellsignal DSC und auch in der resultierenden Regelgröße im Rückkoppelzweig weitgehend vermieden.

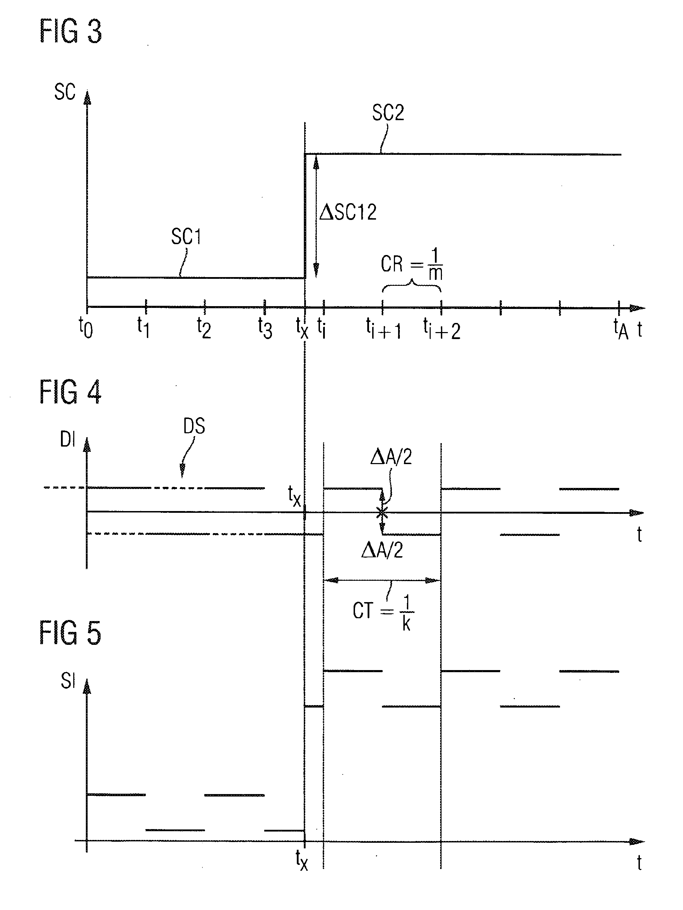

Allgemein ausgedrückt wird die Abtastfrequenz des diskreten PID-Reglers PC vorzugsweise gleich oder gleich Vielfachen der Frequenz des Dither-Signals gewählt. Die Abtastfrequenz ist dabei insbesondere gleich oder größer der Frequenz des Dither-Signals gewählt. Wird beispielsweise der Anker AN des Regelmagnetventils CV mit einer Frequenz von k Hz und einer Stromamplitude von ΔA/2 in mA in Schwingungen versetzt, um den Anker in ständiger Bewegung zu halten und somit den Einfluss der Haftreibung und/oder Magnethysterese zu reduzieren bzw. zu eliminieren, und ist die Aufruffrequenz bzw. Abtastfrequenz des PID-Reglers PC gleich m Hz, wobei m≥ k gilt, so wird das Verhältnis zwischen Ankerschwingungsfrequenz k und der Abtastfrequenz m des PID-Reglers PC zweckmäßigerweise gleich n=round (m/(2k)) gewählt, wobei round einen Operator zur Rundung auf ganze Zahlen N (=natürliche Zahl) darstellt. Im PID-Regler PC wird somit für n Zyklen des Reglers der Sollstrom SC um ΔA/2 mA erhöht und anschließend für n Zyklen des Reglers um ΔA/2 mA verringert. Im Mittel erhält man dann den durch die Führungsgröße SC bestimmten Strom I und behält somit die ursprüngliche Reglergenauigkeit bei. Trotzdem wird der Anker AN beständig mit einer Grundschwingung in Bewegung gehalten. Diese taktsynchrone Beaufschlagung des Sollstroms SC mit einem überlagerten Dither-Signal DS wird anhand der Figuren 3 mit 5 näher erläutert.

Figur 3 zeigt einen zeitlichen Verlauf des Sollstroms SC ohne Beaufschlagung mit einem Dither-Signal. Entlang der Abszisse ist die Zeit t, entlang der Ordinaten sind die Sollstromwerte SC aufgetragen. Der Sollstrom SC verläuft im Ausführungsbeispiel von Figur 3 zunächst bis zum Zeitpunkt tx mit den konstanten Pegel SC1 und springt zum Zeitpunkt tx um den Wert ΔSC12 auf den konstanten Soll-Strompegel SC2. Zusätzlich sind entlang der Abszisse t die Abtastzeitpunkte t₀ mit tA des diskreten Reglers CV aufgetragen. Für sie gilt, dass die Periode, d.h. der zeitliche Abstand CR zwischen zwei benachbarten Abtastzeitpunkten wie z.B. tᵢ und tᵢ₊₁ gleich 1/m ist, wobei m die Abtastfrequenz des digitalen Reglers CV ist.

Intern im PID-Regler PC wird das Dither-Signal DS mit der Schwingungsfrequenz k generiert. Dies veranschaulicht schematisch die Figur 4. Entlang der Abszisse ist wiederum die Zeit t, entlang der Ordinaten sind die Stromwerte DI des Dither-Signals DS aufgetragen. Das dortige Dither-Signal DS wechselt innerhalb der Periode l/k zwischen den Strom-Amplitudenwerten ΔA/2 und -AA/2 genau einmal. Die Zykluszeit CT dieses Dither-Signals DS beträgt also l/k, wobei k die Frequenz des Dither-Signals ist. Im PID-Regler PC wird nun eine Überlagerung zwischen diesem Dither-Signal DS und dem eingangs zugeführten Sollwertstrom SC mittels der Beaufschlagungsprozedur DIS im Gleichtakt vorgenommen. Dazu wird hier im Ausführungsbeispiel der Figuren 3 und 4 der Zeitpunkt für den Wechsel des Dithersignals DS auf einen positiven oder negativen Amplitudenwert ±ΔA/2 jeweils einem Abtastzeitpunkt t₀ mit t_{A} des diskreten Reglers zugeordnet.

Die Figur 5 zeigt den mit dem Dither-Signal DS synchron beaufschlagten resultierenden Sollstrom SI im Regler CV, der frei von Schwebungen oder Störinterferenzen ist.

Allgemein ausgedrückt wird also der Sollstrom SC derart mit einem zusätzlichen Dither-Signal überlagert, dass die Abtastfrequenz des digitalen Reglers gleich oder gleich Vielfachen der Frequenz des Dithersignals entspricht. Daraus ergeben sich insbesondere folgende Vorteile:
Der durch die Führungsgröße bestimmte Strom im Regelmagnetventil wird im Mittel einer Periode l/k exakt eingehalten, d.h. die ursprüngliche Regelgenauigkeit des diskreten Reglers mit der Abtastfrequenz m wird weitgehend eingehalten. Schwebungen im resultierenden Sollwertstrom aus der Überlagerung der Führungsgröße und dem Dither-Signal sind weitgehend vermieden. Dadurch bleibt die Ankerschwingung des Ankers stets im Takt zur Taktung des digitalen Reglers.
Weiterhin sind keine zusätzlichen Filter erforderlich, die die Sprungantwort des digitalen Reglers negativ beeinflussen könnten. Dessen Dynamik wird somit nicht beeinträchtigt. Weiterhin sind für die Ankerschwingungen niedrige Frequenzen realisierbar, die in der Praxis gewünscht sind. Wird der Verhältnisfaktor n nach jeder Periode l/k neu bestimmt, dann ist in vorteilhafter Weise eine variable Aufruffrequenz bzw. Taktfrequenz m für den Regler einstellbar.

In entsprechender Weise kann die erfindungsgemäße Regelung des elektrischen Spulenstroms eines Regelmagnetventils auch bei Steuergeräten für sonstige Kraftfahrzeug- Hydraulikvorrichtungen wie z.B. Hydraulikbremsen durchgeführt werden.

## Patentansprüche

1. Steuergerät (GS) mit einem Regler (PC), der zur Regelung des elektrischen Spulenstroms (I) eines Regelmagnetventils (CV), dessen Anker (AN) der Einstellung eines gewünschten Volumenstroms (Q) in einer Kraftfahrzeug-Hydraulikvorrichtung (HP) dient, über einen Rückkoppelzweig (FB) mit dem Regelmagnetventil (CV) unter Bildung eines Regelkreises verbunden ist, wobei der Anker (AN) des Regelmagnetventils (CV) zur Reduzierung seiner Haftreibung und/oder Magnethysterese ständig mit einer Ankerschwingung beaufschlagt ist,
**dadurch gekennzeichnet,**
**dass** intern im Regler (PC) des Regelkreises selbst der Sollstrom (SC), der dem Regler (PC) eingangsseitig als Führungsgröße zugeführt ist, im Wesentlichen synchron zum Taktzyklus (m) des Reglers (PC) mit einem intern im Regler (PC) generierten Dither-Signal (DS) zur Erzeugung der Ankerschwingung beaufschlagt ist.

2. Steuergerät nach Anspruch 1,
**dadurch gekennzeichnet,**
**dass** die Kraftfahrzeug-Hydraulikvorrichtung (HP) durch eine Kupplung oder eine Hydraulikbremse gebildet ist.

3. Steuergerät nach einem der vorhergehenden Ansprüche,
**dadurch gekennzeichnet,**
**dass** der Regler (PC) als PID- Regler ausgebildet ist.

4. Steuergerät nach einem der vorhergehenden Ansprüche,
**dadurch gekennzeichnet,**
**dass** das Verhältnis zwischen der Abtastfrequenz (m) des Reglers (PC) und der Frequenz (k) des Dithers-Signals (DS) derart gewählt ist, dass gilt: round(m/(2k))=n ε N (ganze Zahl), wobei der Operator round die Rundung auf ganze Zahlen darstellt, und n die Anzahl der Zyklen der Regelung des Reglers (PC) repräsentiert, innerhalb der die Führungsgröße (SC) des Reglers (PC) um eine vorgebbare Stromamplitude (ΔA/2 mA) erhöht und anschließend um dieselbe Stromamplitude (ΔA/2 mA) verringert ist.

5. Verfahren zur Regelung des elektrischen Spulenstroms (I) eines Regelmagnetventils (CV), dessen Anker (AN) der Einstellung eines gewünschten Volumenstroms (Q) in einer Kraftfahrzeug-Hydraulikvorrichtung (HP) dient, mittels einem Regler (PC) eines Steuergeräts (GS), der über einen Rückkoppelzweig (FB) mit dem Regelmagnetventil (CV) unter Bildung eines Regelzweiges verbunden ist, wobei der Anker (AN) des Regelmagnetventils (CV) zur Reduzierung seiner Haftreibung und/oder Magnethysterese ständig mit einer Ankerschwingung beaufschlagt wird, insbesondere nach einem der vorhergehenden Ansprüche,
**dadurch gekennzeichnet,**
**dass** intern im Regler (PC) des Regelkreises selbst der Sollstrom (SC), der dem Regler (PC) eingangsseitig als Führungsgröße zugeführt wird, im Wesentlichen synchron zum Taktzyklus (m) des Reglers (PC) mit einem intern im Regler (PC) generierten Dither-Signal (DS) zur Erzeugung der Ankerschwingung beaufschlagt wird.

## Claims

1. Control device (GS) comprising a controller (PC) which, in order to control the electric coil current (I) of a controlling solenoid valve (CV) whose armature (AN) serves to set a desired volume flow (Q) in a motor vehicle hydraulic device (HP), is connected via a feedback branch (FB) to the controlling solenoid valve (CV) so as to form a control circuit, wherein an armature oscillation is continuously applied to the armature (AN) of the controlling solenoid valve (CV) in order to reduce the static friction and/or magnet hysteresis thereof,
**characterized**
**in that**, internally in the controller (PC) of the actual control circuit, a dither signal (DS) which is generated internally in the controller (PC) and has the purpose of generating the armature oscillation is applied, essentially synchronously with respect to the clock cycle (m) of the controller (PC), to the setpoint current (SC) which is fed on the input side to the controller (PC) as a control variable.

2. Control device according to Claim 1,
**characterized**
**in that** the motor vehicle hydraulic device (HP) is formed by a clutch or a hydraulic brake.

3. Control device according to one of the preceding claims,
**characterized**
**in that** the controller (PC) is embodied as a PID controller.

4. Control device according to one of the preceding claims,
**characterized**
**in that** the ratio between the sampling frequency (m) of the controller (PC) and the frequency (k) of the dither signal (DS) is selected in such a way that the following applies: round(m/(2k))=n ε N (integer), wherein the operator round represents the rounding to integers, and n represents the number of cycles of the control operation of the controller (PC) within which the reference variable (SC) of the controller (PC) is increased by a predefinable current amplitude (ΔA/2 mA), and is subsequently reduced by the same current amplitude (ΔA/2 mA).

5. Method for controlling the electric coil current (I) of a controlling solenoid valve (CV) whose armature (AN) serves to set a desired volume flow (Q) in a motor vehicle hydraulic device (HP), by means of a controller (PC) of a control device (GS) which is connected via a feedback branch (FB) to the controlling solenoid valve (CV) so as to form a control circuit, wherein an armature oscillation is continuously applied to the armature (AN) of the controlling solenoid valve (CV) in order to reduce static friction and/or magnet hysteresis thereof, in particular according to one of the preceding claims,
**characterized**
**in that**, internally in the controller (PC) of the actual control circuit, a dither signal (DS) which is generated internally in the controller (PC) and has the purpose of generating the armature oscillation is applied, essentially synchronously with respect to the clock cycle (m) of the controller (PC), to the setpoint current (SC) which is fed on the input side to the controller (PC) as a control variable.

## Revendications

1. Appareil de commande (GS) avec un régulateur (PC) qui, pour le réglage du courant électrique (I) de la bobine d'une électrovanne de régulation (CV), dont l'induit (AN) sert au réglage du courant volumique (Q) choisi au sein d'un dispositif hydraulique (HP) d'un véhicule automobile, est relié à l'électrovanne de régulation (CV) via une boucle de rétroaction (FB) en formant un circuit de régulation, dans lequel l'induit (AN) de l'électrovanne de régulation (CV) est constamment sollicité par une oscillation de l'induit en vue de la réduction de son frottement statique et/ou de son hystérésis magnétique,
**caractérisé en ce que**
à l'intérieur du régulateur (PC) du circuit de régulation lui-même, un signal Dither (DS) généré à l'intérieur du régulateur (PC) est superposé au courant nominal (SC), lequel est conduit au régulateur (PC), du côté entrée, comme grandeur de référence, en mode sensiblement synchronisé avec le cycle d'horloge (m) du régulateur (PC), afin de générer l'oscillation de l'induit.

2. Appareil de commande selon la revendication 1,
**caractérisé en ce que**
le dispositif hydraulique (HP) du véhicule automobile est formé par un embrayage ou un frein hydraulique.

3. Appareil de commande selon l'une quelconque des revendications précédentes,
**caractérisé en ce que**
le régulateur (PC) se présente sous la forme d'un régulateur PID.

4. Appareil de commande selon l'une quelconque des revendications précédentes,
**caractérisé en ce que**
le rapport entre la fréquence d'échantillonnage (m) du régulateur (PC) et la fréquence (k) du signal Dither (DS) est choisi selon la formule round(m/(2k))=n ε N (nombre entier), dans laquelle l'opérateur round représente l'arrondi au nombre entier le plus proche et n représente le nombre de cycles de réglage du régulateur (PC), à l'intérieur desquels la grandeur de référence (SC) du régulateur (PC) est augmentée d'une amplitude du courant que l'on peut déterminer au préalable (ΔA/2 mA) et réduite ensuite de la même amplitude du courant (ΔA/2 mA).

5. Procédé de régulation du courant électrique (I) de la bobine d'une électrovanne de régulation (CV), dont l'induit (AN) sert au réglage d'un courant volumique (Q) choisi dans un dispositif hydraulique (HP) de véhicule automobile, au moyen d'un régulateur (PC) d'un appareil de commande (GS), lequel régulateur est connecté à l'électrovanne de régulation (CV) via une boucle de rétroaction (FB) en formant un circuit régulateur, dans lequel l'induit (AN) de l'électrovanne de régulation (CV) est constamment sollicité par une oscillation de l'induit en vue de la réduction de son frottement statique et/ou de son hystérésis magnétique, en particulier selon l'une quelconque des revendications précédentes,
**caractérisé en ce que**
à l'intérieur du régulateur (PC) du circuit régulateur lui-même, un signal Dither (DS) généré à l'intérieur du régulateur (PC) est superposé au courant nominal (SC), lequel est conduit au régulateur (PC) du côté entrée, comme grandeur de référence, en mode sensiblement synchronisé avec le cycle d'horloge (m) du régulateur (PC), afin de générer l'oscillation de l'induit.
